# EUROPÄISCHE PATENTANMELDUNG

(11) **EP 4 400 487 A1**
(43) Veröffentlichungstag der Anmeldung: **17.07.2024**
(21) Anmeldenummer: 23216506.8
(22) Anmeldetag: 14.12.2023
(51) Int. Cl.: C04B 41/48, C04B 41/52, C04B 41/89, H01M 10/0562, C04B 111/00

(54) **VERFAHREN ZUR HERSTELLUNG EINES FESTKÖRPERELEKTROLYTEN FÜR EINE BATTERIEZELLE**

(30) Priorität: 10.01.2023 DE 102023200133
(71) Anmelder: VOLKSWAGEN AG, 38440 Wolfsburg (DE)
(72) Erfinder: JANSEN, Tobias, 38106 Braunschweig (DE); KOCH, Stephan Leonhard, 38239 Salzgitter (DE); KUNZE, Miriam, 30926 Seelze (DE)
(74) Vertreter: FDST Patentanwälte

(57) **Zusammenfassung**

Die Erfindung betrifft ein Verfahren zur Herstellung eines Festkörperelektrolyten (2) für eine Batteriezelle (4), wobei ein keramischer Grünling (8) bereitgestellt wird, wobei der Grünling (8) zu einem Festkörperelektrolytmaterial (14) gesintert wird, und wobei das Festkörperelektrolytmaterial (14) nach dem Sintern elektrodenseitig mit einer Schutzschicht (18) aus Polytetrafluoroethylen beschichtet, und anschließend abgekühlt wird.

## Beschreibung

Die Erfindung betrifft ein Verfahren zur Herstellung eines Festkörperelektrolyten für eine Batteriezelle. Die Erfindung betrifft weiterhin einen Festkörperelektrolyten, eine Batteriezelle, und eine Verwendung von Polytetrafluoroethylen (PTFE) als Schutzschicht für ein Festkörperelektrolytmaterial.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt.

Zur Erzeugung oder Bereitstellung einer ausreichend hohen Betriebsspannung weisen solche Fahrzeugbatterien typischerweise mindestens ein Batteriemodul (Batteriezellmodul) auf, bei welchem mehrere einzelne Batteriezellen modular verschaltet sind. Alternativ ist ein sogenanntes Cell2Pack-Design möglich, bei welchem die Batteriezellen direkt zu der Fahrzeugbatterie zusammengeschaltet, insbesondere parallelgeschaltet, und nicht vorab zu Modulen zusammengefasst werden.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. In der Regel sind hierbei mehrere Schichtzellen als ein Zellenstapel übereinander gestapelt angeordnet.

Schichtzellen mit einem Festkörperelektrolyten (Festelektrolyt, FE), nachfolgend auch als Festkörperzellen, Feststoffzellen oder ASSB-Zellen (ASSB: all solid state battery) bezeichnet, weisen bei gleichem Baugewicht und/oder Bauvolumen eine höhere Energiespeicherdichte als Schichtzellen mit Flüssigelektrolyten auf. Batterien mit Festkörperzellen sind nachfolgend auch als Festkörperbatterien (FKB) oder Feststoffbatterien bezeichnet.

In Festkörperbatterien werden die Elektroden oder Elektrodenschichten, also die Kathoden mit einem Katholyt beziehungsweise die Anoden (ungleich Li-Metall) mit einem Anolyt, mit einem Festkörperelektrolyten (Keramik, Glas oder Glaskeramik) als Separator zu einem Zellstapel gestapelt. Der Anolyt und/oder der Katholyt können hierbei aus einem Polymer oder einer Keramik, einem Glas oder einer Glaskeramik bestehen.

Bei Feststoffbatterien ist der Festkörperelektrolyt wichtig für die Energiedichte, Leistungsdichte und Sicherheit der Festkörperzelle beziehungsweise der Batterie. Separatoren aus lithiumleitenden (lithiumionenleitenden) Festkörperelektrolyten weisen hierbei jedoch häufig eine deutliche Instabilität gegenüber Luftfeuchte und Luftsauerstoff auf. Aufgrund einer hohen ionischen Leitfähigkeit werden bei Festkörperzellen beispielsweise sulfidische Festkörperelektrolyte, also Festkörperelektrolyte mit einer sulfidischen Verbindung, verwendet. Nachteiligerweise weisen sulfidbasierte Festkörperelektrolyten jedoch eine geringe Luftstabilität auf. Insbesondere kann hierbei durch eine chemische Reaktion des sulfidischen Festkörperelektrolyten mit einer Luftfeuchtigkeit gasförmiger Schwefelwasserstoff (H₂S) entstehen. Schwefelwasserstoff ist ein giftiges, korrosives und brennbares Gas, und kann bereits ab einer Konzentration von 5 ppm (parts per million) zu Irritationen von Augen, Nase und Hals führen.

Weiterhin kommt es bei einem Abkühlen im Rahmen eines Sinterprozesses beziehungsweise der Herstellung der lithiumionenleitenden Keramik des Festkörperelektrolyten zu einem Abdampfen von Lithium, bei welchem ein deutlicher Teil des Lithiums aus dem Separator abdampft. Das Lithium-Abdampfen und die Reaktion mit Luftbestandteilen verringern die Lithiumleitfähigkeit und damit die Performanz des Festkörperelektrolyten für Festkörperzellen.

Bei der Herstellung einer Festkörperzelle oder Festkörperbatterie ist es in der Regel gewünscht, dass sich in der Festkörperbatterie die Lithium-Anode insitu im ersten Ladezyklus ausbildet.

Damit diese Abscheidung funktioniert, ist es jedoch zwingend notwendig, dass die Oberfläche des Festelektrolytseparators bestimmte Eigenschaften aufweist.

Um das luftempfindliche Festkörperelektrolytmaterial gegen Reaktionen mit Luftfeuchtigkeit (Wasser) oder Kohlenstoffdioxid (CO₂) zu schützen, wird die Zellenfertigung oder Produktion der Festkörperzelle beispielsweise unter Schutzgasatmosphäre oder in einem Trockenraum mit einem niedrigen Taupunkt (beispielsweise -40 °C) durchgeführt. Dadurch treten hohe Kosten bei der Herstellung des Festkörperelektrolyten auf, wodurch die Herstellungskosten der Batterie- oder Festkörperzelle nachteilig erhöht werden.

Weiterhin erfolgt die Prozessierung mit Schutzplatten mit hohen Lithiumanteil um einer Lithium-Abdampfung entgegenzuwirken. Weiterhin wird beispielsweise eine Nickel-Schicht auf das gesinterte Festkörperelektrolytmaterial für die Abscheidung des Lithiums insitu aufgetragen. Nickel (Ni) als Abscheidungsschicht bringt jedoch zusätzliches Gewicht in das System, und kann auch nicht beliebig dünn appliziert werden. Dies führt zu einer Verringerung der gravimetrischen und volumetrischen Energiedichte der Festkörperzelle. Darüber hinaus führt der Prozess zum Auftragen des Nickels zu einem weiterem Ausschuss.

Der Erfindung liegt die Aufgabe zugrunde, ein besonders geeignetes Verfahren zur Herstellung eines Festkörperelektrolyten für eine Batteriezelle anzugeben. Insbesondere sollen ein Feuchteschutz und eine Anbindung an eine Anode und/oder Kathode realisiert werden. Der Erfindung liegt weiterhin die Aufgabe zugrunde, einen besonders geeigneten Festkörperelektrolyten und eine besonders geeignete Batteriezelle sowie eine besonders geeignete Verwendung anzugeben.

Hinsichtlich des Verfahrens wird die Aufgabe mit den Merkmalen des Anspruchs 1 und hinsichtlich des Festkörperelektrolyten mit den Merkmalen des Anspruchs 7 sowie hinsichtlich der Batteriezelle mit den Merkmalen des Anspruchs 8 und hinsichtlich der Verwendung mit den Merkmalen des Anspruchs 9 erfindungsgemäß gelöst. Vorteilhafte Ausgestaltungen und Weiterbildungen sind Gegenstand der Unteransprüche. Die im Hinblick auf das Verfahren angeführten Vorteile und Ausgestaltungen sind sinngemäß auch auf den Festkörperelektrolyten und/oder die Batteriezelle und/oder die Verwendung übertragbar und umgekehrt.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Das erfindungsgemäße Verfahren ist zur Herstellung eines Festkörperelektrolyten (Festelektrolytseparator) für eine Batteriezelle, also einer Festkörper- oder Feststoffzelle, vorgesehen sowie dafür geeignet und ausgestaltet.

Verfahrensgemäß wird hierbei zunächst ein keramischer Grünling oder Grünkörper (engl.: Greensheet) bereitgestellt. Unter einem Grünkörper oder einem Grünling ist insbesondere ein bei der Herstellung von Sinterwerkstücken ungebrannter beziehungsweise ungesinterter Rohling zu verstehen.

Der Grünling wird anschließend mittels eines Sinterprozesses zu einem Festkörperelektrolytmaterial gesintert. Erfindungsgemäß wird das Festkörperelektrolytmaterial nach dem Sintern beziehungsweise nach dem Sinterprozess elektrodenseitig mit einer Schutzschicht, welche zumindest teilweise aus Polytetrafluoroethylen (PTFE) besteht, beschichtet, und anschließend abgekühlt. Dadurch ist ein besonders geeignetes Herstellungsverfahren realisiert. Insbesondere ist das mit PTFE beschichtete Festkörperelektrolytmaterial hierbei vollständig abkühlbar, und kann unter normalen Raumkonditionen (Umgebungstemperatur und Umgebungsfeuchte) weiterverarbeitet werden. Die PTFE-Schutzschicht realisiert hierbei insbesondere einen Feuchte- oder Feuchtigkeitsschutz, so dass das Festkörperelektrolytmaterial bei der Weiterverarbeitung nicht in einen direkten Kontakt mit einer Umgebungsluft/Luftfeuchte gelangt und dadurch für die Weiterverarbeitung kein Trockenraum oder Schutzgas benötigt wird. Die Weiterverarbeitung ist somit wesentlich vereinfacht. Die PTFE-Schutzschicht verbessert weiterhin die Anbindung an eine Elektrode der Batteriezelle. Weiterhin weist der dadurch hergestellte Festkörperelektrolyt eine höhere Energiedichte (sowohl gravimetrisch als auch volumetrisch) im Vergleich zu einer Applikation einer Ni-Schicht auf. Die PTFE-Schutzschicht ist hierbei bevorzugt dünner als eine herkömmliche metallische Schutzschicht ausgeführt. Mit anderen Worten weist die PTFE-Schutzschicht eine gegenüber metallischen Schutzschichten reduzierte Schichtdicke auf. Aufgrund der reduzierten Dichte und Dicke der PTFE-Schutzschicht ergeben sich somit weitere Vorteile im Hinblick auf das Baugewicht.

Unter "elektrodenseitig" ist hier und im Folgenden insbesondere diejenige Seite oder Oberfläche des Festkörperelektrolytmaterials zu verstehen, welche im Betrieb einer Elektrode oder Elektrodenschicht, also einer Anode (Anodenschicht) oder einer Kathode (Kathodenschicht) zugewandt ist. In der Batteriezelle ist der Festkörperelektrolyt oder Separator sandwichartig zwischen der Kathode und der Anode angeordnet, so dass das Festkörperelektrolytmaterial zwei stirn- oder planseitige Elektrodenseiten, eine Anodenseite und eine Kathodenseite, aufweist.

Auf der Anodenseite kann das PTFE eine schlüssige Verbindung zu einem Stromsammler realisieren. Dies bedeutet, dass die PTFE-Schutzschicht anodenseitig auch als eine Haftschicht wirken kann. Die PTFE-Schutzschicht ermöglicht bei einer Verwendung in einer Batteriezelle weiterhin, dass Lithiumionen durch das PTFE geleitet und anschließend als Lithiummetall insitu abgeschieden werden.

Auf der Kathodenseite wird durch die PTFE-Schutzschicht eine gute Anbindung der Kathodenschicht zu einem sulfidischen oder polymeren oder Gel-Elektrolyt realisiert. Die Beschichtung auf der Kathodenseiten schützt weiterhin den Festelektrolyten im Betrieb der Batteriezelle vor Zersetzung und Zersetzungsprodukten.

Durch das erfindungsgemäße Verfahren sind besonders niedrige Prozesskosten bei der Herstellung des Festkörperelektrolyten ermöglicht, da nach der PTFE-Beschichtung keine separate Inert- oder Schutzgasatmosphäre für die Verarbeitung notwendig ist. Weiterhin weist das dadurch hergestellte Festkörperelektrolytmaterial eine verbesserte Lagerfähigkeit und eine reduzierte Alterung auf.

In einer geeigneten Ausführung wird eine Schutzschicht aufgebracht, welche vollständig aus PTFE besteht. Somit wird eine Schutzschicht aus reinem PTFE, also eine Schutzschicht, welche zu 100 % aus PTFE besteht, aufgebracht.

In einer bevorzugten Weiterbildung wird nicht lediglich eine Elektrodenseite (Anodenseite oder Kathodenseite), sondern beide Elektrodenseiten, also die Anodenseite und die Kathodenseite, des Festkörperelektrolytmaterials beschichtet. Mit anderen Worten wird das Festkörperelektrolytmaterial nach dem Sintern beidseitig mit der Schutzschicht beschichtet. Dadurch ist ein verbesserter Schutz des Festkörperelektrolytmaterials sowie eine verbesserte Anbindung an die Anode und an die Kathode gewährleistet.

Erfindungsgemäß wird die PTFE-Schutzschicht nach dem Sintern aufgetragen. Ein zusätzlicher oder weiterer Aspekt der Erfindung sieht hierbei vor, dass das Festkörperelektrolytmaterial mit der Schutzschicht beschichtet wird, während das Festkörperelektrolytmaterial eine Temperatur zwischen 200 °C (Grad Celsius) und 250 °C aufweist. Dies bedeutet, dass die Beschichtung oberhalb Temperaturen von 200 °C bis 250 °C durchgeführt wird, während sich das keramische Festelektrolytmaterial nach der Sinterung im Abkühlungsschritt befindet. Hier ist das PTFE noch stabil und Wasser beziehungsweise Feuchtigkeit kann sich noch nicht am Festelektrolytmaterial ablegen und mit diesem nachteilig reagieren.

In einer vorteilhaften Ausführung wird die Schutzschicht durch (Auf-)Sprühen auf die mindestens eine Elektrodenseite des Festkörperelektrolytmaterials aufgetragen. Das Aufsprühen ist insbesondere bei hohen Temperaturen des Festkörperelektrolytmaterials vorteilhaft, da somit eine direkte Auftragung der Schutzschicht nach dem Sinterprozess ermöglicht ist. Durch das Sprühen wird ein direkter Kontakt einer Beschichtungsvorrichtung mit dem heißen Festkörperelektrolytmaterial vermieden, wodurch die Lebensdauer der Beschichtungsvorrichtung verbessert wird.

Das (Auf-)Sprühen kann in einer zusätzlichen oder alternativen Ausführungsform mittels einer Lösung von PTFE in einem Lösungsmittel erfolgen. Das Lösungsmittel verdampft hierbei beim Auftragen auf das noch heiße Feststoffelektrolytmaterial unmittelbar, wodurch das Feststoffelektrolytmaterial weiter abgekühlt wird. Dies begünstigt eine höhere Prozessgeschwindigkeit wodurch die Herstellungskosten vorteilhaft reduziert werden.

Sowohl die Elektroden (Anode, Kathode) als auch das Festkörperelektrolytmaterial weisen fertigungsbedingt zumindest eine gewisse Oberflächenrauhigkeit auf. Bei einer Feststoffzelle ist es für einen guten Ladungstransport jedoch notwendig, dass der Kontakt zwischen den Zellschichten, also insbesondere zwischen der Elektrodenschicht und der Separator- beziehungsweise-Festkörperelektrolytschicht, möglichst innig ist. Aufgrund der Rauigkeit der Oberflächen, kann jedoch häufig keine vollständig flächige Kontaktierung der beiden Zellschichten realisiert werden. Neben der besseren Produktionsgestaltung führt der Auftrag PTFE-Beschichtung vorteilhafterweise auch dazu, dass Oberflächenunebenheiten der Elektroden oder des Festkörperelektrolytmaterials ausgeglichen werden, so dass im Gesamtverbund keine inhomogenen Druckverteilungen auftreten, welche zu einem Bruch des Festkörperelektrolyten führen könnten. Um eine möglichst homogene Anbindung des Festkörperelektrolytmaterials an den Stromkollektor (Stromsammler) und/oder die Elektroden zu gewährleisten wird in einer bevorzugten Ausbildung die Schutzschicht mit einer Schichtdicke zwischen 0,05 µm (Mikrometer) und 10 µm, insbesondere zwischen 0,1 µm bis 5 µm, auf das Festkörperelektrolytmaterial aufgetragen. Dadurch wird eine besonders homogene Abscheidung des Lithiums gewährleistet.

Der erfindungsgemäße Festkörperelektrolyt(separator) ist für eine Batteriezelle (Feststoff-, Festkörperzelle) vorgesehen sowie dafür geeignet und eingerichtet. Der Festkörperelektrolyt weist erfindungsgemäß ein gesintertes keramisches Festkörperelektrolytmaterial auf, welches elektrodenseitig mit einer Schutzschicht aus PTFE beschichtet ist. Dadurch ist ein Festelektrolytseparator mit Feuchteschutz und mit Anbindung für eine Anode und/oder Kathode realisiert.

Die erfindungsgemäße Batteriezelle weist einen vorstehend beschriebenen Festkörperelektrolyten auf. Die Batteriezelle ist insbesondere eine Feststoff- oder Festkörperzelle.

Erfindungsgemäß wird Polytetrafluoroethylen als eine Schutzschicht für ein gesintertes keramisches Festkörperelektrolytmaterial eines Festkörperelektrolyten einer Batteriezelle verwendet. Dadurch ist einerseits ein zuverlässiger Feuchtigkeitsschutz des Festkörperelektrolytmaterials realisiert. Andererseits ist somit eine besonders homogene Anbindung an eine Anode und/oder Kathode realisierbar.

Nachfolgend ist ein Ausführungsbeispiel der Erfindung anhand einer Zeichnung näher erläutert. Darin zeigen in schematischen und vereinfachten Darstellungen:
- Fig. 1: ein Flussdiagramm für ein Verfahren zur Herstellung eines Festkörperelektrolyten, und
- Fig. 2: eine Batteriezelle mit dem Festkörperelektrolyten.

Einander entsprechende Teile und Größen sind in allen Figuren stets mit den gleichen Bezugszeichen versehen.

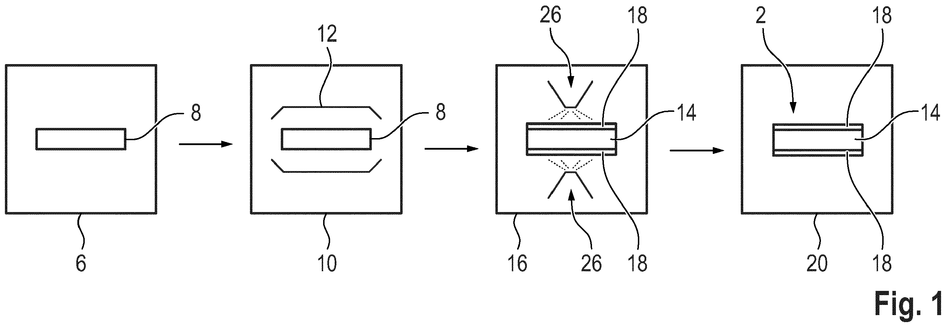

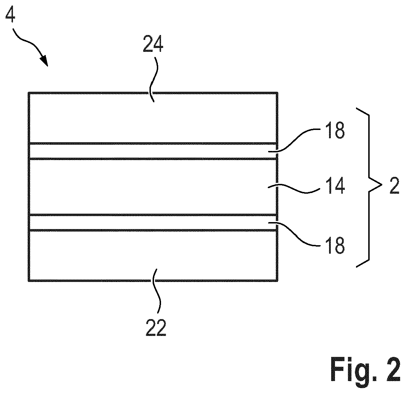

Die Fig. 1 zeigt in aufeinanderfolgenden Darstellungen schematisch ein Herstellungsverfahren für einen Festkörperelektrolyten 2, welcher als ein Separator in einer (Festkörper-)Batteriezelle 4 (Fig. 2) verwendbar ist. Der Festkörperelektrolyt 2 ist nachfolgend auch als Festkörperelektrolytseparator 2 bezeichnet.

In einem ersten Verfahrensschritt 6 wird ein keramischer Grünling 8 bereitgestellt. Der Grünling 8 wird anschließend in einem Verfahrensschritt 10 in einem Ofen 12 mittels eines Sinterprozesses zu einem Festkörperelektrolytmaterial 14 gesintert.

Das Festkörperelektrolytmaterial 14 wird nach dem Sintern in einem Verfahrensschritt 16 beidseitig mit einer Schutzschicht 18 aus reinem Polytetrafluoroethylen (PTFE) beschichtet, und anschließend in einem Verfahrensschritt 20 abgekühlt.

Der Beschichtungsprozess 16 schließt sich im Wesentlichen unmittelbar an den Sinterprozess 10 an, wobei das Festkörperelektrolytmaterial 14 mit der Schutzschicht 18 beschichtet wird, während das Festkörperelektrolytmaterial 12 (noch) eine Temperatur zwischen 200 °C (Grad Celsius) und 250 °C aufweist. Dies bedeutet, dass die Beschichtung oberhalb Temperaturen von 200 °C bis 250 °C durchgeführt wird. Die Schutzschicht 18 wird hierbei vorzugsweise durch Sprühdüsen 26 mittels (Auf-)Sprühen auf das Festkörperelektrolytmaterial 14 aufgetragen.

Der Festkörperelektrolyt 2 wird vorzugsweise als ein Separator in der Batteriezelle 4 verwendet, und wird hierbei zwischen zwei Elektroden oder Elektrodenschichten 22, 24 sandwichartig angeordnet. In dem Beschichtungsprozess 16 werden hierbei die den Elektroden 22, 24, also der Anode 22 und der Kathode 24, zugewandten Oberflächen des Festkörperelektrolytmaterials 14 mit der Schutzschicht 18 beschichtet. Die Schutzschichten 18 werden hierbei in einer ausreichenden Schichtdicke aufgetragen, so dass oberflächenrauhigkeitsbedingte Unebenheiten der Anode 22 und Kathode 24 ausgeglichen werden. Hierzu wird die Schutzschicht 18 beispielsweise mit einer Schichtdicke zwischen 0,05 µm und 10 µm auf das Festkörperelektrolytmaterial 14 aufgetragen.

Während des Abkühlens 20 wird das mit PTFE beschichtete Festkörperelektrolytmaterial 14 vollständig abgekühlt, und kann anschließend unter normalen Raumkonditionen weiterverarbeitet werden. Die beidseitige Schutzschicht 18 realisiert hierbei insbesondere einen Feuchte- oder Feuchtigkeitsschutz, so dass das Festkörperelektrolytmaterial 14 bei der Weiterverarbeitung nicht in einen direkten Kontakt mit einer Umgebungsluft und/oder Luftfeuchte gelangt.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit dem Ausführungsbeispiel beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Festkörperelektrolyt
- 4: Batteriezelle
- 6: Verfahrensschritt
- 8: Grünling
- 10: Verfahrensschritt/Sinterprozess
- 12: Ofen
- 14: Festkörperelektrolytmaterial
- 16: Verfahrensschritt/Beschichtungsprozess
- 18: Schutzschicht
- 20: Verfahrensschritt/Abkühlen
- 22: Elektrode/Anode
- 24: Elektrode/Kathode
- 26: Sprühdüse

## Patentansprüche

1. Verfahren zur Herstellung eines Festkörperelektrolyten (2) für eine Batteriezelle (4),
- wobei ein keramischer Grünling (8) bereitgestellt wird,
- wobei der Grünling (8) zu einem Festkörperelektrolytmaterial (14) gesintert wird, und
- wobei das Festkörperelektrolytmaterial (14) nach dem Sintern elektrodenseitig mit einer Schutzschicht (18), welche zumindest teilweise aus Polytetrafluoroethylen besteht, beschichtet, und anschließend abgekühlt wird.

2. Verfahren nach Anspruch 1,
**dadurch gekennzeichnet,**
**dass** die Schutzschicht (18) vollständig aus Polytetrafluoroethylen besteht.

3. Verfahren nach Anspruch 1 oder 2,
**dadurch gekennzeichnet,**
**dass** das Festkörperelektrolytmaterial (14) nach dem Sintern beidseitig mit der Schutzschicht (18) beschichtet wird.

4. Verfahren nach einem der Ansprüche 1 bis 3,
**dadurch gekennzeichnet,**
**dass** das Festkörperelektrolytmaterial (14) mit der Schutzschicht (18) beschichtet wird, während das Festkörperelektrolytmaterial (14) eine Temperatur zwischen 200 °C und 250 °C aufweist.

5. Verfahren nach einem der Ansprüche 1 bis 4,
**dadurch gekennzeichnet,**
**dass** die Schutzschicht (18) durch Sprühen auf das Festkörperelektrolytmaterial (14) aufgetragen wird.

6. Verfahren nach einem der Ansprüche 1 bis 5,
**dadurch gekennzeichnet,**
**dass** die Schutzschicht (18) mit einer Schichtdicke zwischen 0,05 µm und 10 µm auf das Festkörperelektrolytmaterial (14) aufgetragen wird.

7. Festkörperelektrolyt (2) für eine Batteriezelle (4), aufweisend ein gesintertes Festkörperelektrolytmaterial (14), welches elektrodenseitig mit einer Schutzschicht (18) aus Polytetrafluoroethylen beschichtet ist.

8. Batteriezelle (4) aufweisend einen Festkörperelektrolyten (2) nach Anspruch 7.

9. Verwendung von Polytetrafluoroethylen als Schutzschicht (18) für ein Festkörperelektrolytmaterial (14) eines Festkörperelektrolyten (2) einer Batteriezelle (4).
